# EUROPEAN PATENT APPLICATION

(11) **EP 4 745 912 A1**
(43) Date of publication of application: **20.05.2026**
(21) Application number: 25216037.9
(22) Date of filing: 14.11.2025
(51) Int. Cl.: G06V 10/764, G06V 10/82, G06V 20/40

(54) **VIDEO CLASSIFICATION SYSTEM**

(30) Priority: 15.11.2024 US 202418949283
(71) Applicant: Lemon Inc., Grand Cayman, KY1-1205 (KY)
(72) Inventor: DONG, Xin, Culver City, 90230 (US); XIONG, Hongyu, Los Angeles, 90066 (US)
(74) Representative: Isarpatent

(57) **Abstract**

A video classification system receives an input video comprising video frames and video audio, generates visual tokens based on the video frames, generates audio embeddings based on the video audio, and inputs the visual tokens into a multi-modal language model to generate contextually informed answers. The contextually informed answers and the audio embeddings are concatenated to generate concatenated tokens, which are inputted into a fully connected layer to generate a vector of class probabilities. Then a video label for the input video is generated and outputted based on the vector of class probabilities.

## Description

### BACKGROUND

Online video streaming services rely on effective video classification and labeling systems to analyze input video content to generate labels that categorize videos by genre, content type, or other criteria. Video classification is used for a range of applications, including content recommendation, search optimization, and filtering or screening for content that does not adhere to a content policy of the streaming service. Labeling video content appropriately not only improves user experience but also ensures compliance with platform policies and regulatory requirements.

Conventional video classification systems typically rely on visual frame data, analyzing individual frames within the video to infer its content. Advanced methods further analyze text and audio data from the video, allowing for a more comprehensive analysis of the video as a whole. For example, the transcript of spoken words and any on-screen text may be extracted to provide contextual clues, while audio analysis can identify certain sounds or tones indicative of specific genres, themes, or potential content concerns.

While multi-modal analysis enhances the accuracy of content classification and labeling by drawing from various data types within a video, these systems still face challenges in achieving both precision and computational efficiency. Analyzing frames, audio, and text together requires substantial computational resources, often leading to high processing costs and longer latency. These computational demands make it difficult to deploy such systems at scale, especially in real-time or near-real-time applications where rapid labeling is essential. Current solutions have not sufficiently addressed the trade-offs between accuracy, context sensitivity, and the computational costs associated with classifying large volumes of video data.

### SUMMARY

In view of the above issues, a video classification computing system is provided for generating a video label for an input video. The computing system includes a processing circuitry and memory storing instructions that, when executed, cause the processing circuitry to receive the input video comprising video frames and video audio, and generate visual tokens based on the video frames. The system further generates audio embeddings based on the video audio, concatenates the contextually informed answers and the audio embeddings to generate concatenated tokens, inputs the concatenated tokens into a fully connected layer to generate a vector of class probabilities, and generates and outputs the video label for the input video based on the vector of class probabilities.

In one aspect, the input video may further comprise video text metadata, instruction tokens may be generated based on the video text metadata, and the instruction tokens may be inputted into the multi-modal language model along with the visual tokens to generate the contextually informed answers.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 illustrates a schematic view of a first computing system executing a trained machine learning video labeling model according to an example of the present disclosure.
Fig. 2 illustrates a schematic view of the detailed operations of the trained machine learning video labeling model of the computing system of Fig. 1.
Fig. 3 illustrates a schematic view of a second computing system executing a training module according to an example of the present disclosure.
Fig. 4 illustrates a schematic view of the second computing system of Fig. 3 executing a model deployment module according to an example of the present disclosure.
Fig. 5 is a flow chart of a first method for generating and outputting a video label for an input video according to an example of the present disclosure.
Fig. 6 is a flow chart of a second method for generating and outputting a video label for an input video according to an example of the present disclosure.
Fig. 7 is a flow chart of a third method for training machine learning video labeling models according to an example embodiment of the present disclosure.
Fig. 8 is a flow chart of a fourth method for training machine learning video labeling models according to an example embodiment of the present disclosure.
Fig. 9 is a flow chart of a fifth method for deploying trained machine learning video labeling models according to an example embodiment of the present disclosure.
Fig. 10 shows an example computing environment of the present disclosure in which the first computing system of Figs. 1 and 2 or the second computing system of Figs. 3 and 4 may be enacted.

### DETAILED DESCRIPTION

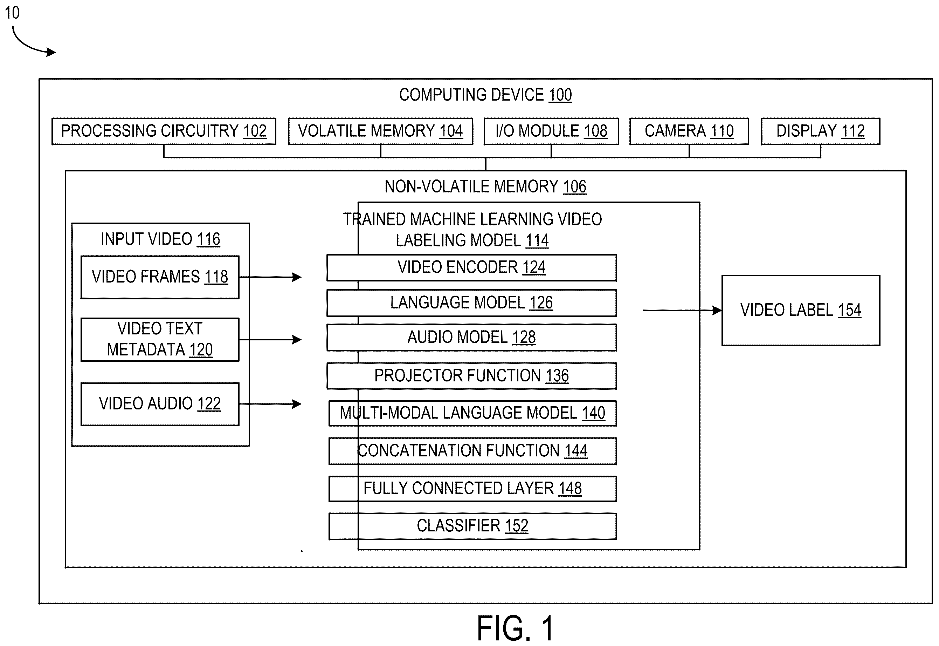

In view of the above, Fig. 1 shows a schematic view of a first example computing system 10 including a computing device 100 for generating a video label 154 for an input video 116 using a trained machine learning video labeling model 114. The computing device 100 includes processing circuitry 102 (e.g., central processing units, or "CPUs"), volatile memory 104, non-volatile memory 106, an input/output (I/O) module 108, a camera 110, and a display 112. The different components are operatively coupled to one another. The non-volatile memory 106 stores instructions to execute the trained machine learning video labeling model 114 which is configured to receive the input video 116 comprising video frames 118, video text metadata 120, and video audio 122, and generate and output a video label 154 based on the input video 116.

For example, the video labeling model 114 may be configured to generate video labels 154 which categorize the input videos 116 based on the detection of content that does not adhere to a content policy of a social media platform operator, such as unoriginal content or content of low quality. The video labeling model 114 may be deployed on digital platforms as a solution for content moderation.

The trained machine learning video labeling model 114 includes a video encoder 124 configured to generate visual features based on the video frames 118, a language model 126 configured to generate instruction tokens based on the video text metadata 120, an audio model 128 configured to generate audio embeddings based on the video audio 122, a projector function 136 configured to generate visual tokens based on the visual features, a multi-modal language model 140 configured to receive input of the instruction tokens and the visual tokens to generate contextually informed answers, a concatenation function 144 configured to concatenate the contextually informed answers and the audio embeddings to generate concatenated tokens, a fully connected layer 148 configured to receive input of the concatenated tokens to generate a vector of class probabilities, and a classifier 152 configured to generate and output the video label 154 based on the vector of class probabilities.

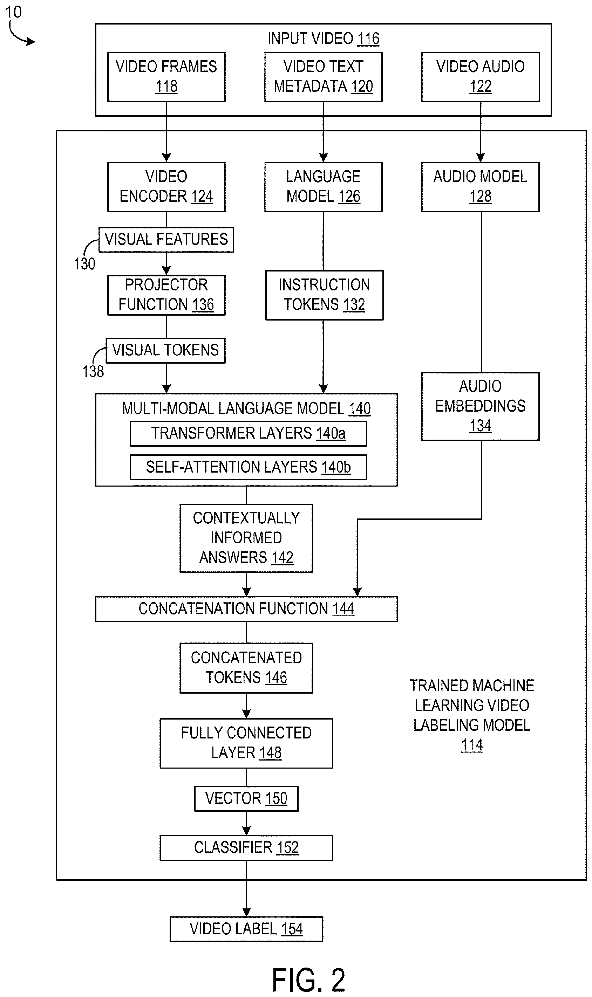

Fig. 2 shows a detailed schematic view of the processes of the trained machine learning video labeling model 114 of Fig. 1 which is configured to receive an input video 116 comprising video frames 118, video text metadata 120, and video audio 122, and generate and output a video label 154 based on the input video 116. Video text metadata 120 containing contextual and descriptive information about the input video 116 is inputted into a pretrained language model 126. The video text metadata 120 may be the title and sticker text of the input video 116. The sticker text may be text elements that are overlaid directly onto the video frames 118 as graphics that are visually distinct from the main video footage. Sticker text may encompass captions, hashtags, and informative commentary that draw the attention of viewers.

The pretrained language model 126 may be configured as transformer-based language model. One example of a transformer-based language model is XLM-RoBERTa, which is pre-trained on a diverse set of languages. The pretrained language model 126 tokenizes and processes the video text metadata 120 to generate instruction tokens 132, which are tokenized text embeddings that represent the semantic content of the video text metadata 120 of the input video 116.

The video frames 118 of the input video 116 are processed by the vision encoder 124, which generates high-dimensional visual features 130 capturing spatial and contextual information of the video frames 118. The vision encoder 124 may be configured as a Vision Transformer (ViT) such as a Swin Transformer or similar deep convolutional network.

The visual features 130 are inputted into a projector function 136, which may be implemented as a two-layer Multilayer Perceptron (MLP) which projects the visual features 130 into a word embedding space to generate sequences of visual tokens 138 that are compatible with the word embeddings of the multi-modal language model 140. This may result in each video frame 118 corresponding to one visual token 138 by 1-D average pooling.

The visual tokens 138 are fed into the multi-modal language model 140 along with instruction tokens 132. Responsive to receiving the visual tokens 138 and instruction tokens 132 as input, the multi-modal language model 140 outputs contextually informed answers 142. The instruction tokens 132 align the visual input of the video frames 118 with linguistic instructions, allowing the multi-modal language model 140 to generate answers 142 grounded in the context provided by both the visual features 130 and the video text metadata 120. The visual tokens 138 and the instruction tokens 132 are integrated directly into the transformer layers 140a of the multi-modal language model 140. The self-attention layers 140b of the multi-modal language model 140 perform the fusion process of fusing the visual tokens 138 and the instruction tokens 132 together to generate the contextually informed answers 142.

LoRA (Low-Rank Adaptation) training may be performed on the self-attention layers 140b of the multi-modal language model 140 to ensure that the multi-modal language model 140 interprets domain-specific video content without the need to retrain the entire multi-modal language model 140. Examples of domain-specific video content may include medical content and sports related content. LoRA introduces additional low-rank matrices to augment the self-attention layers 140b. When the multi-modal language model 140 is trained on domain-specific video content, only parameters of the low-rank matrices are updated during training. For example, when the multi-modal language model 140 is trained on cooking-specific video content, the multi-modal language model 140 is exposed to video frames with relevant cooking-specific annotations. During training, only the parameters in the low-rank matrices are updated, while the rest of the weights of the multi-modal language model 140 remain frozen. After LoRA training, the multi-modal language model 140 may be capable of labeling videos from the specific domain with higher accuracy. For example, after being trained on cooking-specific video content, the model 140 may effectively detect and label video frames based on action sequences, objects, or context unique to cooking-specific videos.

An audio model 128 processes the video audio 122 and outputs latent representations or high-dimensional audio embeddings 134, which capture the semantic and temporal aspects of the video audio 122 of the input video 116. The audio model 128 may be configured as an automatic speech recognition system. One example of an automatic speech recognition system is Whisper.

The concatenation function 144 is configured to concatenate the contextually informed answers 142 outputted by the multi-modal language model 140 with the audio embeddings 134 outputted by the audio model 128 to generate concatenated tokens 146, which are fed as input into a fully connected layer 148. The fully connected layer 148 is configured to perform a dimensional transformation of the concatenated tokens 146 to generate a vector 150 of class probabilities that is used to make a classification. The classification may be a binary classification or a multi-class classification. The fully connected layer 148 applies learned weights and an activation function (ReLU or softmax in classification) to project the concatenated tokens 146 into a class probability space to generate the vector 150 of class probabilities. A classifier 152 subsequently receives the vector 150 of class probabilities and generates and outputs a video label 154 for the input video 116 based on the vector 150.

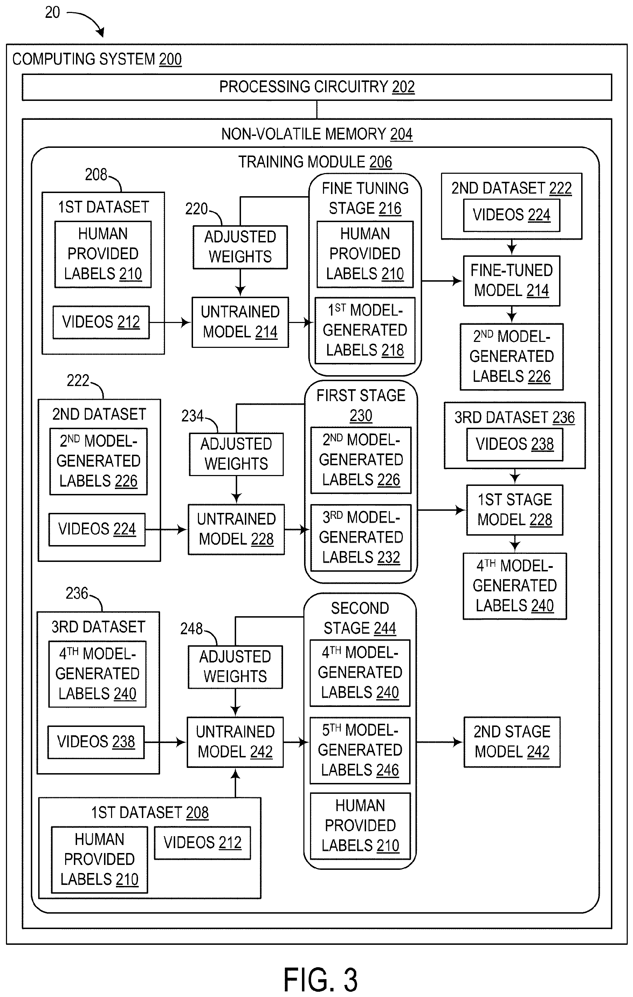

Fig. 3 shows a schematic view of a second example computing system 20 including a computing device 200 instantiating a training module 206 for the training of a first stage video labeling model 228 and a second stage video labeling model 242 that are configured with the same architecture as the trained machine learning video labeling model 114 described in Fig. 2. The computing device 200 includes processing circuitry 202 (e.g., central processing units, or "CPUs") and non-volatile memory 204 which stores instructions to execute a training module 206 to train the first stage model 228 and the second stage model 242. The second stage model 242 may be larger than the first stage model 228. In other words, the second stage model 242 may have a higher parameter configuration than the first stage model 228. Despite being more computationally intensive, the second stage model 242 may be more accurate than the first stage model 228 due to its additional parameters and training on larger datasets of videos.

A team of human labelers may manually label a first set of videos 212 with video labels 210 such as "original" or "unoriginal". These human provided labels 210 serve as the ground truth. During the training of a fine-tuned model 214 in the fine tuning stage 216, a first dataset 208 comprising the first set of videos 212 with the human provided labels 210 is inputted into an untrained model 214 to generate first model-generated labels 218 for each video 212 in the first set. In other words, the untrained model 214 is used to label the same set of videos 212 that the team of human labelers manually labeled, so that each video 212 receives a first model-generated label 218 that can be compared to the human provided label 210. During the fine tuning stage 216, the losses between the human provided labels 210 and the first model-generated labels 218 are calculated, and then the weights 220 of the untrained model 214 are adjusted based on the calculated losses to generate a trained fine-tuned model 214.

During the training of the first stage model 228 in the first stage 230, a second dataset 222 comprising a second set of videos 224 is inputted into the trained fine-tuned model 214 to generate second model-generated labels 226 for each video 224 in the second set. The second dataset 222 may be larger than the first dataset 208. Then, the second dataset 222 comprising the second set of videos 224 with the second model-generated labels 226 is inputted into a untrained first stage model 228 to generate third model-generated labels 232. During the first stage 230, losses between the second model-generated labels 226 and the third model-generated labels 232 are calculated, and then the weights 234 of the untrained first stage model 228 are adjusted based on the calculated losses to generate a trained first stage model 228.

During the training of the second stage model 242 in the second stage 244, a third dataset 236 comprising a third set of videos 238 is inputted into the trained first stage model 228 to generate fourth model-generated labels 240 for each video 238 in the third set. The third dataset 236 may be larger than the first dataset 208 or the second dataset 222. The third dataset 236 comprising the third set of videos 238 with the fourth model-generated labels 240 and the first dataset 208 comprising the first set of videos 212 with human provided labels 210 are inputted into an untrained second stage model 242 to generate fifth model-generated labels 246 for each video 212 in the first set and each video 238 in the third set. During the second stage 244, losses between the fifth model-generated labels 246 and the fourth model-generated labels 240, and losses between the human provided labels 210 and the fifth model-generated labels 246 are calculated, and weights 248 of the untrained second stage model 242 are adjusted based on the calculated losses to generate a trained second stage model 242.

In one example, the videos 212 with the human provided labels 210 may be manually annotated video samples that were collected from multiple domains. The training module 206 may then be used to perform a quality inspection of the annotated video samples, thereby providing important feedback to the annotators who labeled the videos 212. Selected videos among the first dataset of videos 212 with human provided labels 210 that differ from the first machine-generated labels 218 in the fine-tuning stage 216 may undergo a second round of review in the second stage 244 of training by comparing the human provided labels 210 of the selected videos to the fifth model-generated labels 246 of the selected videos generated by the second stage model 242, thereby providing a rigorous process for evaluating the quality of the annotations of the human-labeled videos 212.

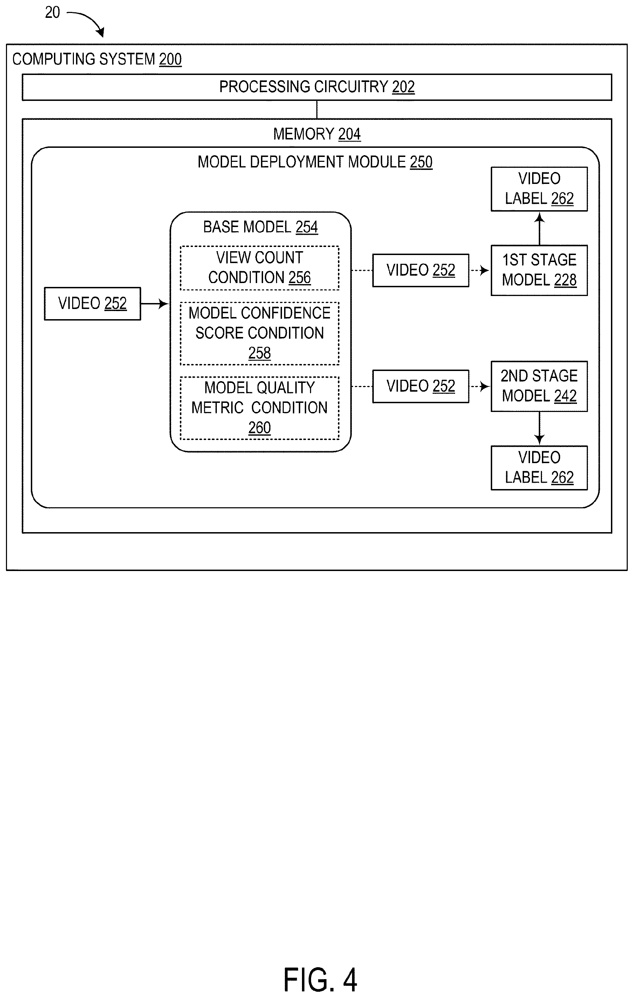

Fig. 4 shows a schematic view of the second example computing system 20 of Fig. 3 including a computing device 200 instantiating a model deployment module 250 for deploying the first stage video labeling model 228 and the second stage video labeling model 242 that were trained by the training module 206 depicted in Fig. 3. The model deployment module 250 may be used on an online service to deploy the first stage model 228 and the second stage model 242 in a cascading structure to label videos 252 that are uploaded and posted by users on the online service. The first stage model 228 or the second stage model 242 is selected to label a given video 252 depending on whether the given video 252 satisfies a given condition.

The first stage model 228, which is configured with fewer parameters than the second stage model 242, is optimized for initial deployment due to its smaller size and computational efficiency. The first stage model 228 and the second stage model 242 may be integrated into the backend infrastructure of the online service that hosts the videos uploaded by users.

A given video 252 that is uploaded onto the computing system 200 is inputted into a base model 254 to determine whether the given video 252 satisfies a given condition. For example, the given condition may be a view count condition 256 to determine whether the view count of the given video 252 surpasses a predetermined view count threshold. Additionally or alternatively, the given condition may be a model confidence score condition 258 to determine whether a model confidence score of the given video 252 surpasses a predetermined confidence score threshold. Additionally or alternatively, the given condition may be a model quality metric condition 260 to determine whether a model quality metric of the given video 252 surpasses a predetermined quality metric threshold. The base model 254 may be configured as a video labeling model with a relatively small number of parameters so as to increase computational efficiency.

Responsive to determining that the given video 252 satisfies the given condition, the given video 252 is inputted into the second stage model 242 to generate and output a video label 262 for the given video 252. Responsive to determining that the given video 252 does not satisfy the given condition, the given video 252 is inputted into the first stage model 228 to generate and output a video label 262 for the given video 252. Accordingly, the model deployment module 250 ensures that a subset of uploaded videos on an online service benefits from refined labeling, maintaining both accuracy and resource efficiency as user demand grows.

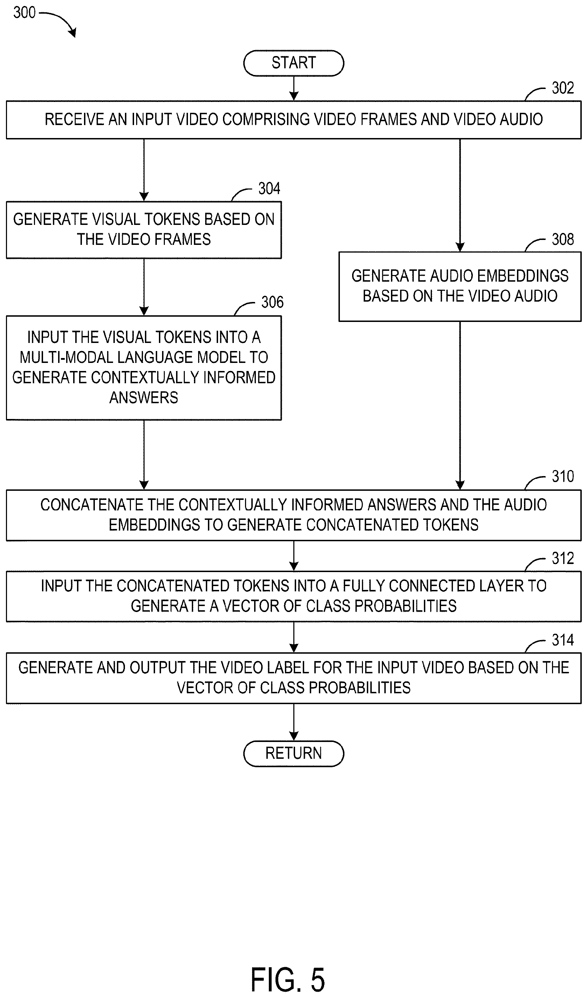

Fig. 5 shows a process flow diagram of a first example method 300 for generating and outputting a video label for an input video. The first example method 300 may be executed by the processing circuitry 102 and memory 104 of the computing system 10 of Figs. 1 and 2. The first example method 300 includes, at step 302, receiving an input video comprising video frames and video audio. The first example method 300 includes, at step 304, generating visual tokens based on the video frames, and at step 306, inputting the visual tokens into a multi-modal language model to generate contextually informed answers. At step 308, the method 300 includes generating audio embeddings based on the video audio.

At step 310, the method 300 includes concatenating the contextually informed answers and the audio embeddings to generate concatenated tokens. At step 312, the method 300 includes inputting the concatenated tokens into a fully connected layer to generate a vector of class probabilities. At step 314, the method 300 includes generating and outputting the video label for the input video based on the vector of class probabilities.

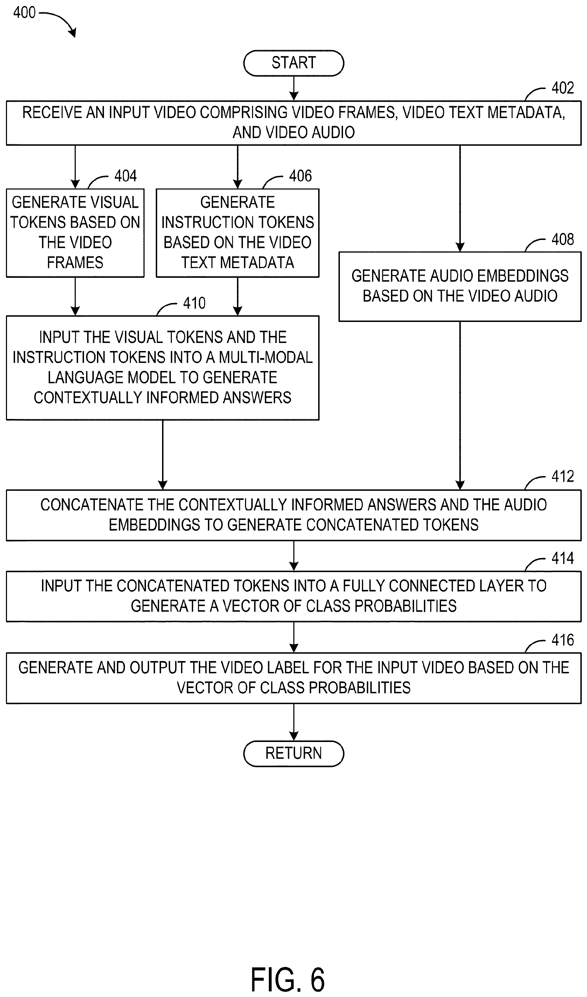

Fig. 6 shows a process flow diagram of a second example method 400 for generating and outputting a video label for an input video. The second example method 400 may be executed by the processing circuitry 102 and memory 104 of the computing system 10 of Figs. 1 and 2. The second example method 400 includes, at step 402, receiving an input video comprising video frames, video text metadata, and video audio. The second example method 400 includes, at step 404, generating visual tokens based on the video frames, and at step 406, generating instruction tokens based on the video text metadata.

At step 410, the method 400 includes inputting the visual tokens and the instruction tokens into a multi-modal language model to generate contextually informed answers. At step 408, the method 400 includes generating audio embeddings based on the video audio.

At step 412, the method 400 includes concatenating the contextually informed answers and the audio embeddings to generate concatenated tokens. At step 414, the method 400 includes inputting the concatenated tokens into a fully connected layer to generate a vector of class probabilities. At step 416, the method 400 includes generating and outputting the video label for the input video based on the vector of class probabilities.

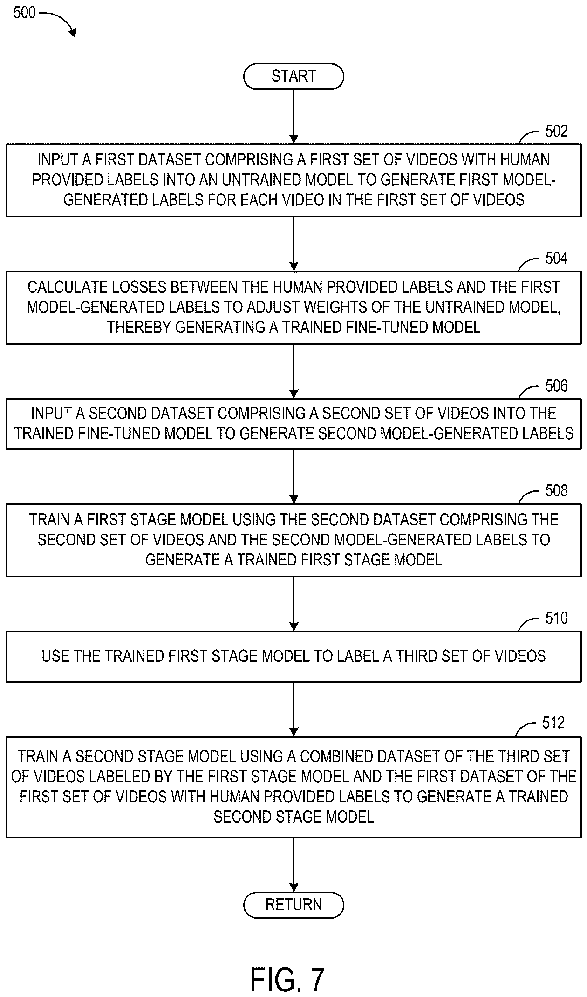

Fig. 7 shows a process flow diagram of a third example method 500 for training machine learning video labeling models. The third example method 500 may be executed by the processing circuitry 202 and memory 204 of the computing system 20 of Fig. 3. The third example method 500 includes, at step 502, inputting a first dataset comprising a first set of videos with human provided labels into an untrained model to generate first model-generated labels for each video in the first set of videos. At step 504, the method 500 includes calculating losses between the human provided labels and the first model-generated labels to adjust the weights of the untrained model, thereby generating a trained fine-tuned model. At step 506, the method 500 includes inputting a second dataset comprising a second set of videos into the trained fine-tuned model to generate second model-generated labels. At step 508, the method 500 includes training a first stage model using the second dataset comprising the second set of videos and the second model-generated labels to generate a trained first stage model. At step 510, the method 500 includes using the trained first stage model to label a third set of videos. At step 512, the method 500 includes training a second stage model using a combined dataset of the third set of videos labeled by the first stage model and the first dataset of the first set of videos with human provided labels to generate a trained second stage model.

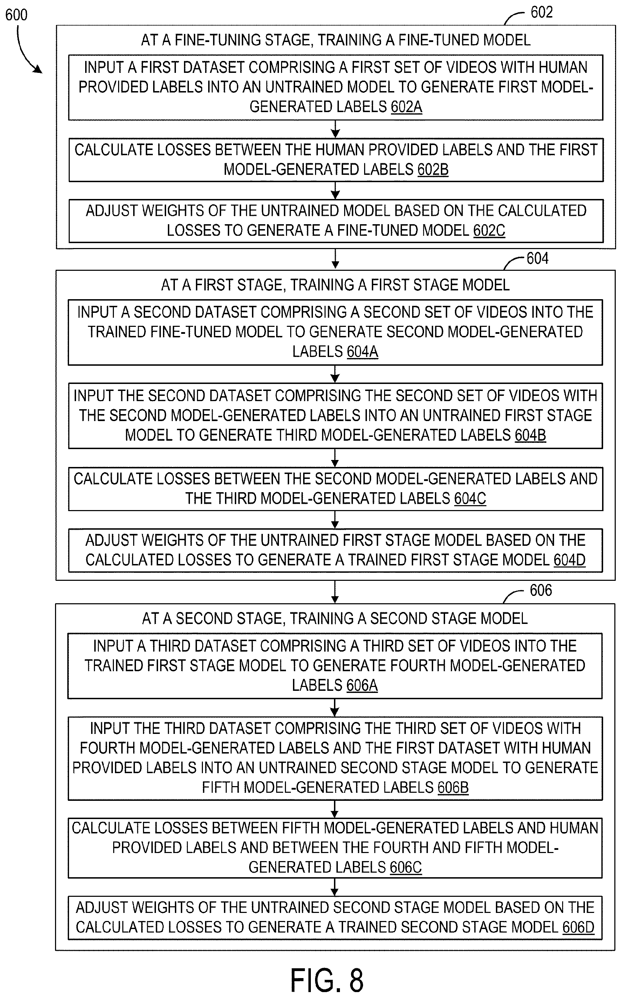

Fig. 8 shows a process flow diagram of a fourth example method 600 for training machine learning video labeling models. The fourth example method 600 may be executed by the processing circuitry 202 and memory 204 of the computing system 20 of Fig. 3. The fourth example method 600 includes, at step 602, training a fine-tuned model at a fine-tuning stage, at step 604, training a first stage model at a first stage, and at step 606, training a second stage model at a second stage.

Step 602 of training the fine-tuned model includes step 602A of inputting a first dataset comprising a first set of videos with human provided labels into an untrained model to generate first model-generated labels, step 602B of calculating losses between the human provided labels and the first model-generated labels, and step 602C of adjusting weights of the untrained model based on the losses calculated in step 602B to generate a fine-tuned model.

Step 604 of training the first stage model includes step 604A of inputting a second dataset comprising a second set of videos into the trained fine-tuned model to generate second model-generated labels, step 604B of inputting the second dataset comprising the second set of videos with the second model-generated labels into an untrained first stage model to generate third model-generated labels, step 604C of calculating losses between the second model-generated labels and the third model-generated labels, and step 604D of adjusting weights of the untrained first stage model based on the losses calculated in step 604C to generate the trained first stage model.

Step 606 of training the second stage model includes step 606A of inputting a third dataset comprising a third set of videos into the trained first stage model to generate fourth model-generated labels, step 606B of inputting the third dataset comprising the third set of videos with fourth model-generated labels and the first dataset with human provided labels into an untrained second stage model to generate fifth model-generated labels, step 606C of calculating losses between fifth model-generated labels and human provided labels and between the fourth and fifth model-generated labels, and step 606D of adjusting weights of the untrained second stage model based on the losses calculated in step 606C to generate a trained second stage model.

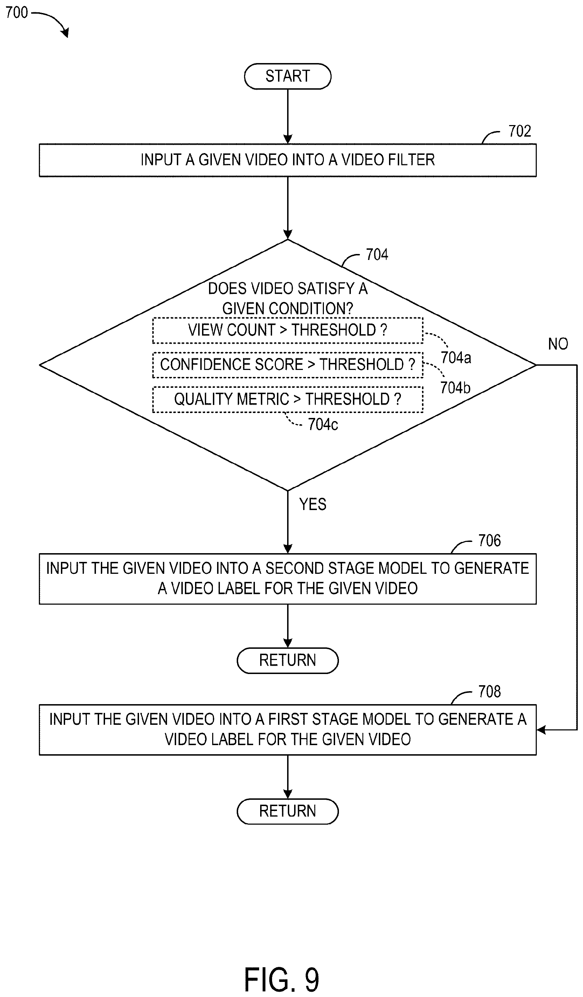

Fig. 9 shows a process flow diagram of a fifth example method 700 for deploying the machine learning video labeling models trained in the fourth example method 600 of Fig. 8. The fifth example method 700 may be executed by the processing circuitry 202 and memory 204 of the computing system 20 of Fig. 4. The fifth example method 700 includes, at step 702, inputting a given video into a base model. The method 700 includes, at step 704, determining whether the given video satisfies a given condition. The given condition may be a view count condition 704a to determine whether the view count of the given video surpasses a predetermined view count threshold, a model confidence score condition 704b to determine whether a model confidence score of the given video surpasses a predetermined confidence score threshold, or a model quality metric condition 704c to determine whether a model quality metric of the given video surpasses a predetermined quality metric threshold.

At step 706, responsive to determining that the given video satisfies the given condition, the given video is inputted into the second stage model to generate a video label for the given video. At step 708, responsive to determining that the given video does not satisfy the given condition, the given video is inputted into the first stage model to generate a video label for the given video.

The above-described systems and methods address the trade-offs between accuracy, context sensitivity, and computational costs that are associated with labeling large volumes of video data. The architecture of the video labeling models is configured to deliver more accurate, efficient, and context sensitive video labeling across diverse content types and categories to reduce computational costs. The multi-stage training of the video labeling models saves computational resources during online deployment by labeling videos using models of varied sizes depending on given conditions which may be defined based on view counts, model confidence scores, and model quality metrics, for example. By training the video labeling models in two stages, training datasets with manually annotated video samples across multiple domains may also be rigorously evaluated for quality and accuracy.

In some embodiments, the methods and processes described herein may be tied to a computing system of one or more computing devices. In particular, such methods and processes may be implemented as a computer-application program or service, an Application Program Interface (API), a library, and/or other computer-program product. In some embodiments, the methods and processes described herein may be tied to a computing system of one or more computing devices. In particular, such methods and processes may be implemented as a computer-application program or service, an API, a library, and/or other computer-program product.

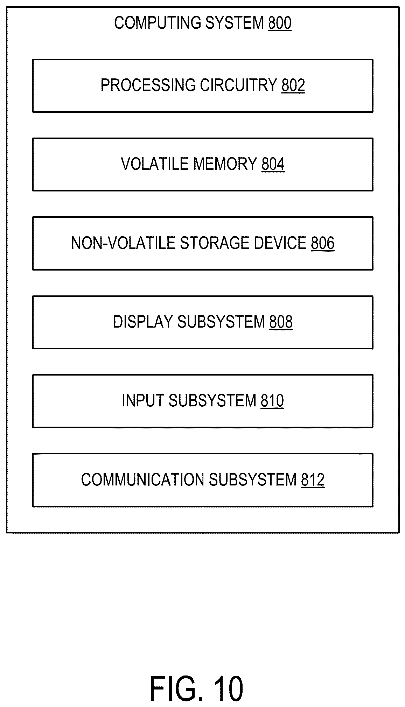

Fig. 10 schematically shows a non-limiting embodiment of a computing system 800 that can enact one or more of the methods and processes described above. Computing system 800 is shown in simplified form. Computing system 800 may embody the computing system 10 described above and illustrated in Figs. 1 and 2 or the computing system 20 described above and illustrated in Figs. 3 and 4. Components of computing system 800 may be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 800 includes processing circuitry 802, volatile memory 804, and a non-volatile storage device 806. Computing system 800 may optionally include a display subsystem 808, input subsystem 810, communication subsystem 812, and/or other components not shown in Fig. 10.

Processing circuitry 802 typically includes one or more logic processors, which are physical devices configured to execute instructions. For example, the logic processors may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the processing circuitry 802 may be single-core or multi-core, and the instructions executed thereon may be configured for sequential, parallel, and/or distributed processing. Individual components of the processing circuitry 802 optionally may be distributed among two or more separate devices, which may be remotely located and/or configured for coordinated processing. For example, aspects of the computing system disclosed herein may be virtualized and executed by remotely accessible, networked computing devices configured in a cloud-computing configuration. In such a case, these virtualized aspects are run on different physical logic processors of various different machines, it will be understood. These different physical logic processors of the different machines will be understood to be collectively encompassed by processing circuitry 802.

Non-volatile storage device 806 includes one or more physical devices configured to hold instructions executable by the processing circuitry 802 to implement the methods and processes described herein. When such methods and processes are implemented, the state of non-volatile storage device 806 may be transformed-e.g., to hold different data.

Non-volatile storage device 806 may include physical devices that are removable and/or built in. Non-volatile storage device 806 may include optical memory, semiconductor memory, and/or magnetic memory, or other mass storage device technology. Non-volatile storage device 806 may include nonvolatile, dynamic, static, read/write, read-only, sequential-access, location-addressable, file-addressable, and/or content-addressable devices. It will be appreciated that non-volatile storage device 806 is configured to hold instructions even when power is cut to the non-volatile storage device 806.

Volatile memory 804 may include physical devices that include random access memory. Volatile memory 804 is typically utilized by processing circuitry 802 to temporarily store information during processing of software instructions. It will be appreciated that volatile memory 804 typically does not continue to store instructions when power is cut to the volatile memory 804.

Aspects of processing circuitry 802, volatile memory 804, and non-volatile storage device 806 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 800 typically implemented in software by a processor to perform a particular function using portions of volatile memory, which function involves transformative processing that specially configures the processor to perform the function. Thus, a module, program, or engine may be instantiated via processing circuitry 802 executing instructions held by non-volatile storage device 806, using portions of volatile memory 804. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 808 may be used to present a visual representation of data held by non-volatile storage device 806. The visual representation may take the form of a graphical user interface (GUI). As the herein described methods and processes change the data held by the non-volatile storage device, and thus transform the state of the non-volatile storage device, the state of display subsystem 808 may likewise be transformed to visually represent changes in the underlying data. Display subsystem 808 may include one or more display devices utilizing virtually any type of technology. Such display devices may be combined with processing circuitry 802, volatile memory 804, and/or non-volatile storage device 806 in a shared enclosure, or such display devices may be peripheral display devices.

When included, input subsystem 810 may comprise or interface with one or more user-input devices such as a keyboard, mouse, touch screen, camera, or microphone.

When included, communication subsystem 812 may be configured to communicatively couple various computing devices described herein with each other, and with other devices. Communication subsystem 812 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 800 to send and/or receive messages to and/or from other devices via a network such as the Internet.

The following paragraphs provide additional description of the subject matter of the present disclosure. One aspect provides a video classification computing system for generating a video label for an input video, the computing system comprising processing circuitry and memory storing instructions that, when executed, cause the processing circuitry to receive the input video comprising video frames and video audio, generate visual tokens based on the video frames, input the visual tokens into a multi-modal language model to generate contextually informed answers, generate audio embeddings based on the video audio, concatenate the contextually informed answers and the audio embeddings to generate concatenated tokens, input the concatenated tokens into a fully connected layer to generate a vector of class probabilities, and generate and output the video label for the input video based on the vector of class probabilities. In this aspect, additionally or alternatively, visual features may be generated based on the video frames, and the visual features may be inputted into a projector function configured to project the visual features into a word embedding space to generate the visual tokens that are compatible with word embeddings of the multi-modal language model. In this aspect, additionally or alternatively, each video frame may correspond to one visual token by 1-D average pooling. In this aspect, additionally or alternatively, the input video may further comprise video text metadata, instruction tokens may be generated based on the video text metadata, and the instruction tokens may be inputted into the multi-modal language model along with the visual tokens to generate the contextually informed answers. In this aspect, additionally or alternatively, the video text metadata may comprise a title and sticker text. In this aspect, additionally or alternatively, the multi-modal language may comprise self-attention layers, LoRA (Low-Rank Adaptation) training may be performed on the self-attention layers to introduce additional low-rank matrices to augment the self-attention layers, and only parameters of the low-rank matrices may be updated during the LoRA training on domain-specific video content.

Another aspect provides a video classification computing method for generating a video label for an input video, the computing method comprising receiving the input video comprising video frames and video audio, generating visual tokens based on the video frames, inputting the visual tokens into a multi-modal language model to generate contextually informed answers, generating audio embeddings based on the video audio, concatenating the contextually informed answers and the audio embeddings to generate concatenated tokens, inputting the concatenated tokens into a fully connected layer to generate a vector of class probabilities, and generating and outputting the video label for the input video based on the vector of class probabilities. In this aspect, additionally or alternatively, visual features may be generated based on the video frames, and the visual features may be inputted into a projector function configured to project the visual features into a word embedding space to generate the visual tokens that are compatible with word embeddings of the multi-modal language model. In this aspect, additionally or alternatively, each video frame may correspond to one visual token by 1-D average pooling. In this aspect, additionally or alternatively, the input video may further comprise video text metadata, instruction tokens may be generated based on the video text metadata, and the instruction tokens may be inputted into the multi-modal language model along with the visual tokens to generate the contextually informed answers. In this aspect, additionally or alternatively, the video text metadata may comprise a title and sticker text. In this aspect, additionally or alternatively, the multi-modal language may comprise self-attention layers, LoRA (Low-Rank Adaptation) training may be performed on the self-attention layers to introduce additional low-rank matrices to augment the self-attention layers, and only parameters of the low-rank matrices may be updated during the LoRA training on domain-specific video content.

Another aspect provides a video classification computing method for training video labeling models for generating a video label for an input video, the computing method comprising inputting a first dataset comprising a first set of videos with human provided labels into an untrained model to generate first model-generated labels for each video in the first set of videos, calculating losses between the human provided labels and the first model-generated labels to adjust weights of the untrained model, thereby generating a trained fine-tuned model, inputting a second dataset comprising a second set of videos into the trained fine-tuned model to generate second model-generated labels, training a first stage model using the second dataset comprising the second set of videos and the second model-generated labels to generate a trained first stage model, using the trained first stage model to label a third set of videos, and training a second stage model using a combined dataset of the third set of videos labeled by the first stage model and the first dataset of the first set of videos with human provided labels to generate a trained second stage model, wherein the second stage model is configured with a higher parameter configuration than the first stage model. In this aspect, additionally or alternatively, the first stage model and the second stage model may be each configured to receive the input video comprising video frames and video audio, generate visual tokens based on the video frames, input the visual tokens into a multi-modal language model to generate contextually informed answers, generate audio embeddings based on the video audio, concatenate the contextually informed answers and the audio embeddings to generate concatenated tokens, input the concatenated tokens into a fully connected layer to generate a vector of class probabilities, and generate the video label for the input video based on the vector of class probabilities. In this aspect, additionally or alternatively, visual features may be generated based on the video frames, and the visual features may be inputted into a projector function configured to project the visual features into a word embedding space to generate the visual tokens that are compatible with word embeddings of the multi-modal language model. In this aspect, additionally or alternatively, the first dataset of videos with human provided labels may comprise video samples across multiple domains, and selected videos among the first dataset with human provided labels that differ from the first model-generated labels may undergo a review by comparing human provided labels of the selected videos to model-generated labels of the selected videos generated by the second stage model. In this aspect, additionally or alternatively, the computing method may further comprise deploying the trained first stage model and the trained second stage model on an online service to label videos that are posted by users on the online service. In this aspect, additionally or alternatively, a given video that is uploaded onto the online service may be inputted into a base model to determine whether the given video satisfies a given condition, responsive to determining that the given video satisfies the given condition, the given video may be inputted into the second stage model to generate a video label for the given video, and responsive to determining that the given video does not satisfy the given condition, the given video may be inputted into the first stage model to generate a video label for the given video. In this aspect, additionally or alternatively, the given condition may be a view count condition to determine whether the view count of the given video surpasses a predetermined view count threshold. In this aspect, additionally or alternatively, the given condition may be a model confidence score condition to determine whether a model confidence score of the given video surpasses a predetermined confidence score threshold. It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

It will be appreciated that "and/or" as used herein refers to the logical disjunction operation, and thus A and/or B has the following truth table.

| A | B | A and/or B |
|---|---|---|
| T | T | T |
| T | F | T |
| F | T | T |
| F | F | F |

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A video classification computing method for generating a video label for an input video, the computing method comprising:
receiving (302) the input video comprising video frames and video audio;
generating (304) visual tokens based on the video frames;
inputting (306) the visual tokens into a multi-modal language model to generate contextually informed answers;
generating (308) audio embeddings based on the video audio;
concatenating (310) the contextually informed answers and the audio embeddings to generate concatenated tokens;
inputting (312) the concatenated tokens into a fully connected layer to generate a vector of class probabilities; and
generating and outputting (314) the video label for the input video based on the vector of class probabilities.

2. The computing method of claim 1, wherein
visual features are generated based on the video frames; and
the visual features are inputted into a projector function configured to project the visual features into a word embedding space to generate the visual tokens that are compatible with word embeddings of the multi-modal language model.

3. The computing method of claim 1, wherein each video frame corresponds to one visual token by 1-D average pooling.

4. The computing method of claim 1, wherein
the input video further comprises video text metadata;
instruction tokens are generated based on the video text metadata; and
the instruction tokens are inputted into the multi-modal language model along with the visual tokens to generate the contextually informed answers.

5. The computing method of claim 4, wherein the video text metadata comprises a title and sticker text.

6. The computing method of claim 1, wherein
the multi-modal language comprises self-attention layers;
low-rank adaptation, LoRA, training is performed on the self-attention layers to introduce additional low-rank matrices to augment the self-attention layers; and
only parameters of the low-rank matrices are updated during the LoRA training on domain-specific video content.

7. A video classification computing method for training video labeling models for generating a video label for an input video, the computing method comprising:
inputting (502) a first dataset comprising a first set of videos with human provided labels into an untrained model to generate first model-generated labels for each video in the first set of videos;
calculating (504) losses between the human provided labels and the first model-generated labels to adjust weights of the untrained model, thereby generating a trained fine-tuned model;
inputting (506) a second dataset comprising a second set of videos into the trained fine-tuned model to generate second model-generated labels;
training (508) a first stage model using the second dataset comprising the second set of videos and the second model-generated labels to generate a trained first stage model;
using (510) the trained first stage model to label a third set of videos; and
training (512) a second stage model using a combined dataset of the third set of videos labeled by the first stage model and the first dataset of the first set of videos with human provided labels to generate a trained second stage model, wherein
the second stage model is configured with a higher parameter configuration than the first stage model.

8. The computing method of claim 1, wherein the first stage model and the second stage model are each configured to:
receive the input video comprising video frames and video audio;
generate visual tokens based on the video frames;
input the visual tokens into a multi-modal language model to generate contextually informed answers;
generate audio embeddings based on the video audio;
concatenate the contextually informed answers and the audio embeddings to generate concatenated tokens;
input the concatenated tokens into a fully connected layer to generate a vector of class probabilities; and
generate the video label for the input video based on the vector of class probabilities.

9. The computing method of claim 8, wherein
visual features are generated based on the video frames; and
the visual features are inputted into a projector function configured to project the visual features into a word embedding space to generate the visual tokens that are compatible with word embeddings of the multi-modal language model.

10. The computing method of claim 1, wherein
the first dataset of videos with human provided labels comprises video samples across multiple domains; and
selected videos among the first dataset with human provided labels that differ from the first model-generated labels undergo a review by comparing human provided labels of the selected videos to model-generated labels of the selected videos generated by the second stage model.

11. The computing method of claim 1, further comprising deploying the trained first stage model and the trained second stage model on an online service to label videos that are posted by users on the online service.

12. The computing method of claim 11, wherein
a given video that is uploaded onto the online service is inputted into a base model to determine whether the given video satisfies a given condition;
responsive to determining that the given video satisfies the given condition, the given video is inputted into the second stage model to generate a video label for the given video; and
responsive to determining that the given video does not satisfy the given condition, the given video is inputted into the first stage model to generate a video label for the given video.

13. The computing method of claim 12, wherein the given condition is a view count condition to determine whether the view count of the given video surpasses a predetermined view count threshold.

14. The computing method of claim 12, wherein the given condition is a model confidence score condition to determine whether a model confidence score of the given video surpasses a predetermined confidence score threshold.

15. A video classification computing system for generating a video label for an input video, the computing system comprising:
processing circuitry and memory storing instructions that, when executed, cause the processing circuitry to perform the method of any of claims 1 to 6.
